# FASCICULE DE BREVET EUROPEEN

(11) **EP 0 845 090 B1**
(45) Date de publication et mention de la délivrance du brevet: **26.07.2000**
(21) Numéro de dépôt: 96929343.0
(22) Date de dépôt: 16.08.1996
(51) Int. Cl.: F16H 61/02, F16H 59/46

(54) **PROCEDE POUR COMMANDER UN CHANGEMENT DE RAPPORT, ET DISPOSITIF DE TRANSMISSION POUR SA MISE EN OEUVRE**
VERFAHREN FÜR EINE GANGSCHALTUNGSSTEUERUNG UND EINRICHTUNG ZU SEINER ANWENDUNG
METHOD FOR EFFECTING A RATIO SHIFT AND TRANSMISSION DEVICE FOR IMPLEMENTING SAME

(30) Priorité: 24.08.1995 FR 9510037
(43) Date de publication de la demande: 03.06.1998
(73) Titulaire: ANTONOV AUTOMOTIVE TECHNOLOGIES B.V., 3012 NJ Rotterdam (NL)
(72) Inventeur: ANTONOV, Roumen, F-75006 Paris (FR)
(74) Mandataire: Pontet, Bernard
(86) Numéro de dépôt international: FR9601291
(87) Numéro de publication internationale: WO9708478

(56) Documents cités:
- EP-A- 0 331 522
- WO-A-94/19629
- DE-A- 4 119 078
- US-A- 3 922 910
- US-A- 4 527 678

## Description

La présente invention concerne un procédé pour commander un changement de rapport dans un dispositif de transmission, notamment un dispositif de transmission automatique à rapports multiples.

La présente invention concerne également un dispositif de transmission mettant en oeuvre un tel procédé.

On connaît d'après le WO-A-9207206 une transmission automatique dans laquelle un embrayage relie sélectivement deux organes rotatifs d'un engrenage différentiel tel qu'un train épicycloïdal, selon que l'une ou l'autre de deux forces antagonistes domine. La première force est par exemple une réaction de denture, plus particulièrement une poussée axiale produite par un pignon à denture hélicoïdale monté mobile axialement, tendant à desserrer l'embrayage. La deuxième force, tendant à serrer l'embrayage, peut être produite par des ressorts et/ou par un moyen tachymétrique centrifuge. Lorsque l'embrayage est desserré, il faut empêcher la rotation d'un troisième organe rotatif de l'engrenage différentiel, et cela peut être assuré par une roue libre empêchant ce troisième organe de tourner en inverse.

Ce type de transmission est très avantageux car son fonctionnement de base ne nécessite ni source de puissance extérieure, ni capteurs, ni circuit de pilotage. C'est le dispositif de transmission lui-même qui produit les forces qui vont le piloter et ces forces sont en même temps une mesure des paramètres nécessaires au pilotage.

Pour des transmissions modernes devant procurer un niveau élevé de confort et d'optimisation du fonctionnement, les forces précitées sont avantageusement complétées par des forces d'appoint, produites par exemple par des actionneurs hydrauliques. Les forces d'appoint peuvent servir à modifier à volonté les conditions de vitesse et de couple pour lesquelles la transmission change de rapport, ou encore à bloquer la transmission sur un rapport donné lorsque cela est souhaité (PCT/FR 94/00 176).

D'un autre côté, il a été constaté selon l'invention que le changement de rapport sous l'action des forces telles qu'une force centrifuge ou une réaction de denture pouvait présenter certains défauts, tels qu'une lenteur excessive.

En outre, lorsque la transmission offre un nombre de rapports de transmission qui est élevé par comparaison avec le nombre de trains d'engrenages utilisés, il y a en général au moins un processus de changement de rapport qui nécessite de relâcher un accouplement et d'en activer un autre, tout en synchronisant parfaitement ces deux opérations. Toute imperfection de cette synchronisation rend le changement de rapport inconfortable pour les occupants du véhicule et introduit des contraintes et/ou des chocs, générateurs d'usure, dans la transmission.

Selon le US-A-4 713 984, l'accouplement qui doit être activé reçoit une force de serrage d'abord réduite, puis progressivement croissante jusqu'à la valeur maximale, tandis que la force de serrage de l'autre accouplement est progressivement relâchée. Les moyens hydrauliques pour la mise en oeuvre de cette solution sont complexes, coûteux et difficiles à mettre au point.

Le DE-A-41 19 078 qui montre les caractéristiques des préambules des revendications 1 et 14 enseigne de régler en fonction de la position du papillon des gaz du moteur la pression hydraulique utilisée pour effectuer un changement de rapport dans une transmission automatique. Le DE-A-41 19 078 enseigne encore de ne modifier qu'avec un certain retard la pression hydraulique en cas de variation de la position du papillon des gaz, pour tenir compte du délai de variation du couple moteur en réponse à la nouvelle position du papillon. L'adaptation d'un tel système à toutes les situations pratiques possibles est extrêmement complexe, et les chocs brutaux ou au contraire les patinages excessifs ne peuvent pas être évités avec certitude. La mise au point du système dépend du bon fonctionnement du moteur et se dégrade à mesure que le moteur et le dispositif de transmission s'usent.

Le but de la présente invention est de mieux maîtriser les processus de changement de rapport impliquant l'actionnement d'au moins un moyen d'accouplement sélectif.

Suivant l'invention, le procédé pour commander le passage progressif d'un rapport de transmission ancien à un rapport de transmission nouveau dans un dispositif de transmission offrant au moins deux rapports de transmission différents et comprenant un actionneur actionnant un moyen d'accouplement sélectif du dispositif de transmission, procédé dans lequel après initiation du processus de changement de rapport on détecte au moins une grandeur physique et on commande l'actionneur en fonction de la valeur détectée de la grandeur physique, est caractérisé en ce que la grandeur physique détectée et une grandeur physique de fonctionnement sur laquelle influe le processus de changement progressif du rapport de transmission.

Au lieu de tenir compte de paramètres qui influent sur le comportement de la transmission, tels que la charge du moteur, et dont il faut donc prévoir l'influence pour tenter d'en compenser l'effet sur la qualité du changement de rapport comme le fait le DE 41 19 078, l'invention exploite une grandeur physique qui au contraire subit l'influence du changement de rapport en train de s'effectuer. On commande donc l'actionneur sur la base des effets réels détectés, et non pas sur la base des effets supposés d'un paramètre circonstanciel.

Comme l'expose le WO-A-92 07 206, l'initiation du processus de changement de rapport peut être due à un patinage spontané du moyen d'accouplement lorsque le couple à transmettre excède la capacité de transmission du moyen d'accouplement soumis à une force de serrage bien déterminée qui peut par exemple être constante ou croissante avec une vitesse de rotation.

L'invention s'applique notamment au cas où deux moyens d'accouplement sélectif doivent changer d'état de manière synchronisée. L'initiation du processus de changement de rapport peut alors être le fait du second moyen d'accouplement sélectif, c'est-à-dire le moyen d'accouplement sélectif autre que celui que l'on commande en fonction de la grandeur physique. Il est alors avantageux de choisir comme second moyen d'accouplement sélectif celui dont l'actionnement fait varier la vitesse d'entrée du dispositif de transmission dans le sens correspondant au changement de rapport à effectuer. Par exemple si le changement de rapport en train de s'effectuer est un passage à un rapport supérieur, qui va donc aboutir à une réduction de la vitesse de rotation de l'entrée de la transmission, on fait en sorte que le processus de changement de rapport commence par l'actionnement de l'un des deux moyens d'accouplement qui provoque une réduction de la vitesse d'entrée de la transmission. Lorsque la grandeur physique détectée atteint une certaine valeur prédéterminée, l'actionnement de l'autre moyen d'accouplement est à son tour initié.

Comme grandeur physique caractéristique de l'évolution du processus de changement de rapport, il est justement avantageux de choisir la vitesse d'entrée, ou encore le rapport entre la vitesse d'entrée et la vitesse de sortie de la transmission, ou bien encore le rapport entre une vitesse relevée en amont et une autre relevée en aval du ou des moyens d'accouplement dont l'état change lorsque le processus de changement de rapport est initié.

De préférence, on pilote les moyens d'accouplement sur la base de deux tables de vérité différentes. Lorsque la grandeur physique franchit un seuil prédéterminé, on passe d'une première des tables de vérité, qui ne prévoit pas l'actionnement du premier moyen d'accouplement pour les conditions de fonctionnement du véhicule qui prévalent au moment du changement de rapport, à une deuxième desdites tables, qui prévoit l'actionnement du premier moyen d'accouplement pour lesdites conditions.

Suivant un second aspect de l'invention, il est proposé un dispositif de transmission pour véhicule comprenant au moins un train d'engrenages et pouvant passer d'un rapport de transmission ancien à un rapport de transmission nouveau par actionnement d'un moyen d'accouplement sélectif, le dispositif comprenant :
- des moyens initiateurs d'un changement de rapport de transmission en fonction d'au moins un paramètre de fonctionnement du véhicule;
- des moyens de détection pour détecter une grandeur physique de fonctionnement; et
- des moyens de pilotage pour commander l'actionnement du moyen d'accouplement d'après l'évolution de la valeur de ladite grandeur physique,
caractérisé en ce que les moyens de détection sont conçus pour détecter une grandeur physique susceptible d'être influencée par le changement progressif du rapport de transmission après son initiation.

Dans la suite, de manière classique, on dit qu'un rapport de transmission est "court" ou "bas" lorsqu'il correspond à une faible vitesse de la sortie par rapport à la vitesse d'entrée. Dans le cas contraire, le rapport est dit "long" ou "élevé".

D'autres particularités et avantages de l'invention ressortiront encore de la description ci-après, relative à des exemples non-limitatifs.

Aux dessins annexés :
- la figure 1 est une demi-vue en coupe longitudinale schématique d'un dispositif de transmission à deux rapports selon l'invention, au repos ;
- la figure 2 et 3 sont des vues analogues à la figure 1, mais relatives au fonctionnement en réducteur, et respectivement en prise directe ;
- la figure 4 est une demi-vue schématique d'un dispositif de transmission à quatre rapports selon l'invention ;
- la figure 5 est une vue d'un organigramme de pilotage du dispositif de transmission de la figure 4 ; et
- les figures 6 et 7 représentent deux tables de vérité utilisées par l'organigramme de la figure 5.

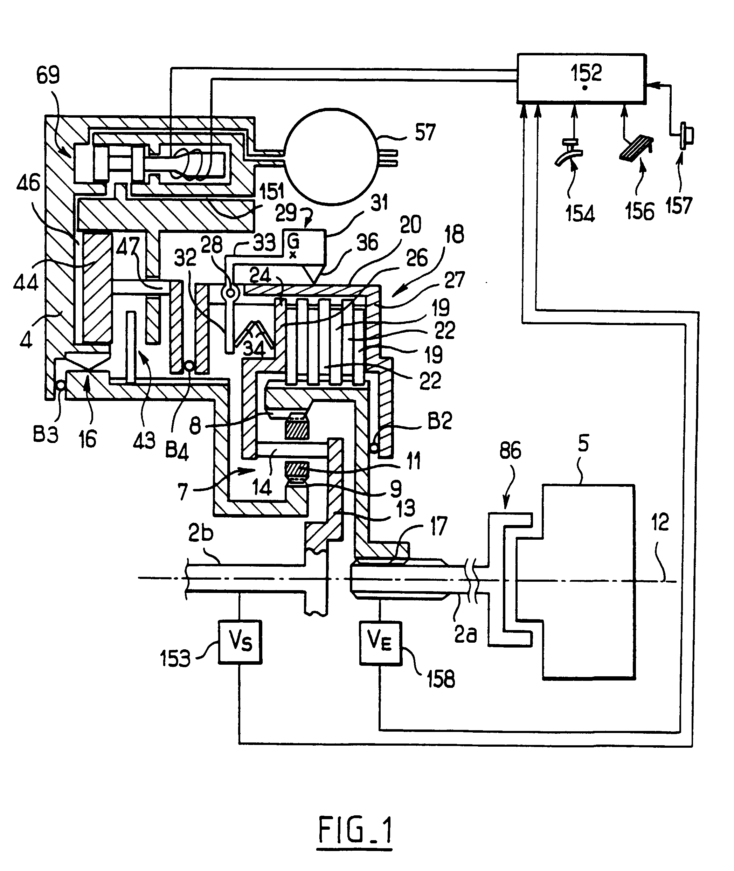

Le dispositif de transmission à deux rapports représenté à la figure 1, destiné en particulier à une automobile, comprend un arbre d'entrée 2a et un arbre de sortie 2b alignés selon l'axe 12 du dispositif. L'arbre d'entrée 2a est relié à l'arbre du moteur 5 d'un véhicule automobile avec interposition d'un embrayage 86 et éventuellement d'autres moyens de transmission non représentés. L'arbre de sortie 2b est destiné à entraîner directement ou indirectement les roues motrices d'un véhicule. Entre l'arbre de sortie 2b et les roues du véhicule peut par exemple être interposé un autre dispositif de transmission à deux ou plusieurs rapports et/ou un inverseur marche avant - marche arrière à commande manuelle, et/ou un différentiel de répartition du mouvement entre les roues motrices du véhicule.

Les arbres d'entrée 2a et de sortie 2b sont immobilisés axialement relativement à un carter 4 du dispositif de transmission.

Le dispositif de transmission comprend un engrenage différentiel formé par un train épicycloïdal 7. Le train 7 comprend une couronne 8 à denture intérieure et une roue planétaire 9 à denture extérieure, engrenant toutes deux avec des satellites 11 supportés, à intervalles angulaires égaux autour de l'axe 12 du dispositif de transmission, par des tourillons excentrés 14 d'un porte-satellites 13 relié rigidement à l'arbre de sortie 2b. La roue planétaire 9 peut tourner librement autour de l'axe 12 du dispositif de transmission par rapport à l'arbre de sortie 2b qu'elle entoure. Toutefois, un dispositif de roue libre 16 empêche la roue planétaire 9 de tourner en inverse, c'est-à-dire en sens inverse du sens normal de rotation de l'arbre d'entrée 2a, par rapport au carter 4 de la transmission.

La couronne 8 est liée en rotation, mais libre en coulissement axial relativement à l'arbre d'entrée 2a, par l'intermédiaire de cannelures 17.

Un embrayage multidisques 18 accouple sélectivement la couronne 8 avec le porte-satellites 13.

L'empilement de disques 19 et 22 de l'embrayage 18 peut être serré axialement entre un plateau de retenue 26 solidaire du porte-satellites 13 et un plateau mobile 27 qui appartient à une cage 20, liée en rotation avec le porte-satellites 13, mais pouvant coulisser par rapport à celui-ci.

La cage 20 supporte des masselottes centrifuges 29 disposées en couronne autour de l'embrayage 18. Les masselottes sont donc liées en rotation à l'arbre de sortie 2b du dispositif de transmission.

Chaque masselotte a un corps massif 31 situé radialement à l'extérieur des disques 19 et 22 et un bec d'actionnement 32 appuyé contre une face extérieure du plateau fixe 26 par l'intermédiaire d'un ressort belleville 34.

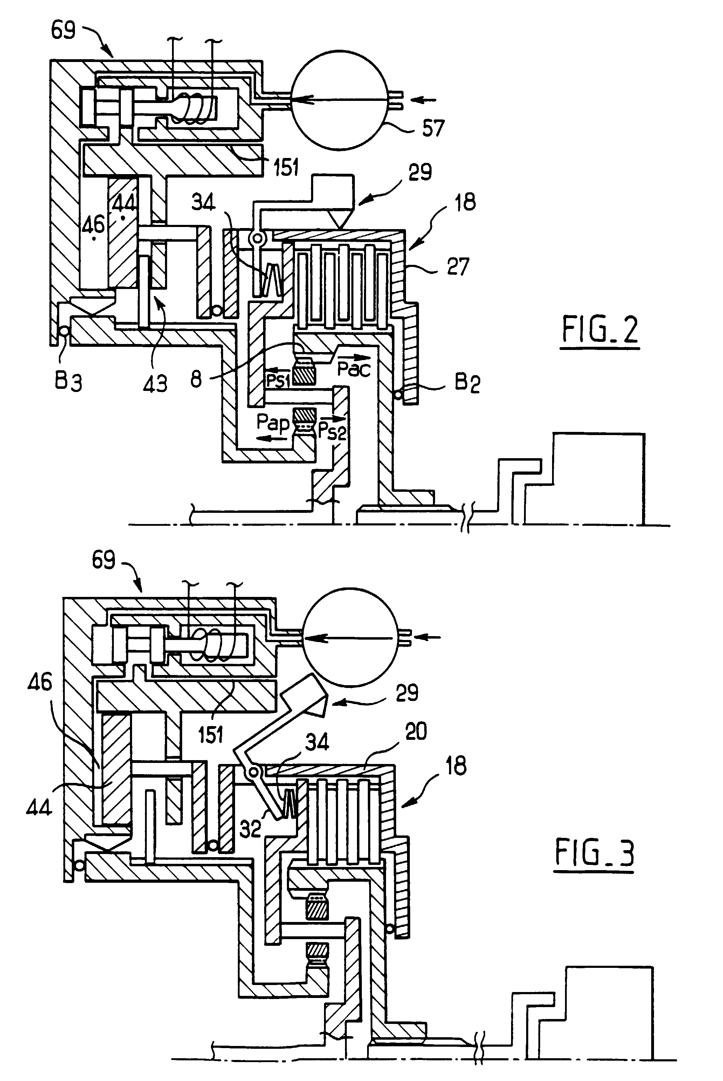

La rotation du porte-satellites 13 tend à faire pivoter radialement vers l'extérieur les corps 31 des masselottes 29 autour de leur axe de pivotement tangentiel 28 sous l'action de leur force centrifuge, pour les faire passer d'une position de repos définie par appui d'une butée 36 des masselottes contre la cage 20 (figures 1 et 2) à une position écartée visible à la figure 3.

Il en résulte alors un déplacement axial relatif entre le bec 32 et l'axe de pivotement 28 de la masselotte. Ce déplacement, qui rapproche le bec 32 du plateau mobile 27, peut correspondre à une compression du ressort belleville 34 et/ou à un déplacement du plateau mobile 27 vers le plateau fixe 26 dans le sens du serrage de l'embrayage 18.

Lorsque le dispositif de transmission est au repos comme représenté à la figure 1, le ressort belleville 34 transmet à la cage 20, par l'intermédiaire des masselottes 29 en butée au repos, une force qui serre l'embrayage 18 de sorte que l'entrée 2a du dispositif de transmission est couplée en rotation avec la sortie 2b et le dispositif de transmission constitue une prise directe capable de transmettre du couple jusqu'à un certain maximum défini par la force de serrage du ressort belleville.

D'autre part, les dentures de la couronne 8, des satellites 11 et de la roue planétaire 9 sont de type hélicoïdal. Ainsi, dans chaque couple de dentures engrenant sous charge, il apparaît des poussées axiales opposées proportionnelles à la force circonférentielle transmise, donc au couple sur l'arbre d'entrée 2a et au couple sur l'arbre de sortie 2b. Le sens d'inclinaison hélicoïdale des dentures est choisi pour que la poussée axiale Pac (figure 2) prenant naissance dans la couronne 8 lorsqu'elle transmet un couple moteur s'exerce dans le sens où la couronne 8 pousse le plateau mobile 27, par l'intermédiaire d'une butée B2, dans le sens écartant les plateaux 26 et 27, donc desserrant l'embrayage 18. La force Pac tend aussi à rapprocher l'un de l'autre le bec 32 des masselottes 29 et le plateau de retenue 26, donc à maintenir les masselottes 29 dans leur position de repos et à comprimer le ressort belleville 34. Les satellites 11, qui engrènent non seulement avec la couronne 8 mais aussi avec la roue planétaire 9, subissent deux réactions axiales opposées PS1 et PS2, qui s'équilibrent, et la roue planétaire 9 subit, compte-tenu de son engrènement avec les satellites 11, une poussée axiale Pap qui est égale en intensité et opposée à la poussée axiale Pac de la couronne 8. La poussée Pap de la roue planétaire 9 est transmise au carter 4 par l'intermédiaire d'une butée B3.

C'est la situation représentée à la figure 2. En supposant cette situation réalisée, on va maintenant décrire le fonctionnement de base du dispositif de transmission. Tant que le couple transmis par l'arbre d'entrée 2a est tel que la poussée axiale Pac dans la couronne 8 suffit pour comprimer le ressort belleville 34 et maintenir les masselottes 29 dans la position de repos représentée à la figure 2, l'écartement entre le plateau de retenue 26 et le plateau mobile 27 de l'embrayage est tel que les disques 19 et 22 glissent les uns contre les autres sans transmettre de couple entre eux. Dans ce cas, le porte-satellites 13 peut tourner à une vitesse différente de celle de l'arbre d'entrée 2a, et il tend à être immobilisé par la charge que doit entraîner l'arbre de sortie 2b. Il en résulte que les satellites 11 tendent à se comporter en inverseurs de mouvement, c'est-à-dire à faire tourner la roue planétaire 9 en sens inverse du sens de rotation de la couronne 8. Mais ceci est empêché par la roue libre 16. La roue planétaire 9 est donc immobilisée par la roue libre 16 et le porte-satellites 13 tourne à une vitesse qui est intermédiaire entre la vitesse nulle de la roue planétaire 9 et la vitesse de la couronne 8 et de l'arbre d'entrée 2a. Le module fonctionne donc en réducteur. Si la vitesse de rotation augmente et que le couple reste inchangé, il arrive un instant où la force centrifuge des masselottes 29 produit sur le plateau mobile 27 par rapport au plateau de retenue 26 une force axiale de serrage plus grande que la poussée axiale Pac, et le plateau mobile 27 est poussé vers le plateau 26 pour réaliser la prise directe.

L'embrayage 18, à mesure qu'il se serre pendant le passage en prise directe, transmet de plus en plus de puissance directement de la couronne 8 liée à l'arbre d'entrée 2a, au porte-satellites 13 lié à l'arbre de sortie 2b. Par conséquent, les dentures du train épicycloïdal 7 travaillent de moins en moins, c'est-à-dire qu'elles transmettent de moins en moins de force. La poussée axiale Pac décroît et finit par s'annuler. Ainsi, la poussée axiale due à la force centrifuge peut s'exercer pleinement pour serrer les plateaux 26 et 27 l'un vers l'autre.

Il peut alors arriver que la vitesse de rotation de l'arbre de sortie 2b diminue, et/ou que le couple à transmettre augmente, au point que les masselottes 29 n'assurent plus dans l'embrayage 18 une force de serrage suffisante pour transmettre le couple. Dans ce cas, l'embrayage 18 commence à patiner. La vitesse de la roue planétaire 9 diminue jusqu'à s'annuler. La roue libre 16 immobilise la roue planétaire et la force de denture Pac réapparaît pour desserrer l'embrayage, de sorte que le dispositif de transmission fonctionne ensuite en réducteur. Ainsi, chaque fois qu'il s'opère un changement du fonctionnement en réducteur au fonctionnement en prise directe, ou inversement, la force axiale Pac varie dans le sens qui stabilise le rapport de transmission nouvellement institué. Ceci est très avantageux d'une part pour éviter les changements de rapport trop fréquents autour de certains points de fonctionnement critiques, et d'autre part pour que les situations de patinage de l'embrayage 18 ne soient que transitoires.

Comme le montre la figure 1, des moyens complémentaires sont prévus pour faire sélectivement fonctionner le dispositif de transmission en réducteur dans des conditions différentes de celles déterminées par les forces axiales dues au ressort belleville 34, aux masselottes centrifuges 29 et à la denture hélicoïdale de la couronne 8.

Pour cela, le dispositif de transmission comprend un frein 43 qui permet d'immobiliser la roue planétaire 9 relativement au carter 4 indépendamment de la roue libre 16. En d'autre termes, le frein 43 est monté fonctionnellement en parallèle avec la roue libre 16 entre la roue planétaire 9 et le carter 4. Un piston hydraulique 44 est monté axialement coulissant pour sélectivement serrer et desserrer le frein 43. Le frein 43 et le piston 44 ont une forme annulaire ayant pour axe l'axe 12 du dispositif de transmission. Le piston 44 est adjacent à une chambre hydraulique 46 qui peut être sélectivement alimentée en huile sous pression pour solliciter le piston 44 dans le sens du serrage du frein 43.

De plus, le piston 44 est relié rigidement à un poussoir 47 qui peut s'appuyer contre la cage 20 au moyen d'une butée axiale B₄. Le montage est tel que lorsque la pression régnant dans la chambre 46 pousse le piston 44 dans la position de serrage du frein 43, la cage 20, avant que le frein 43 ne soit serré, est repoussée de manière suffisante pour que l'embrayage 18 soit relâché.

Ainsi, lorsque le piston 44 est dans la position de serrage du frein (figure 2), la roue planétaire 9 est immobilisée même si le porte-satellites 13 tend à tourner plus vite que la couronne 8, comme c'est le cas lors du fonctionnement en retenue, et par conséquent le module fonctionne en réducteur, comme le permet le desserrage de l'embrayage 18.

L'ensemble 43, 44, 46, 47 qui vient d'être décrit constitue donc un moyen qui peut être mis à la disposition du conducteur du véhicule pour obliger le module à fonctionner en réducteur lorsque le conducteur souhaite augmenter l'effet de frein moteur, par exemple en descente, ou lorsqu'il souhaite augmenter le couple moteur sur l'arbre de sortie 2b. Lorsque le couple est moteur, le frein 43, s'il est serré, exerce une action redondante avec celle de la roue libre 16, mais cela n'est pas gênant.

L'alimentation et la purge de la chambre 46 sont commandées par une électrovanne 69. Lorsqu'elle est au repos, l'électrovanne 69 (figures 1 et 3) relie la chambre 46 avec un trajet de fuite 151 qui est hydrauliquement résistant. Lorsque l'électrovanne 69 est alimentée électriquement (figure 2), elle isole la chambre 46 du trajet de fuite 151 et la relie avec la sortie d'une pompe 57 entraînée par le moteur 5. Indépendamment de l'état de l'électrovanne 69, la pompe 57 peut également servir à alimenter un circuit de lubrification (non représenté) du dispositif de transmission.

L'électrovanne 69 est pilotée par une unité de pilotage 152 reliée à un détecteur 153 de la vitesse Vs de l'arbre de sortie 2b, un détecteur de position d'un sélecteur "manuel/automatique" 154 mis à la disposition du conducteur, un détecteur de la position de la pédale d'accélérateur 156, et un sélecteur "normal/sport" 157 permettant au conducteur de choisir entre deux comportements automatiques différents du dispositif de transmission.

Selon la présente invention, un détecteur supplémentaire 158 relève la vitesse d'entrée V_{E} sur l'arbre 2a. Au moins lorsque le dispositif fonctionne en prise directe, et que par conséquent le piston 44 est désactivé, l'unité de pilotage 152 surveille le rapport entre la vitesse d'entrée V_{E} et la vitesse de sortie V_{S}. Tant que la prise directe est réalisée, ce rapport est égal à 1. Si la vitesse d'entrée V_{E} augmente par rapport à la vitesse de sortie V_{S}, c'est que l'embrayage 18 commence à patiner et que par conséquent le dispositif de transmission a initié spontanément un passage au fonctionnement en réducteur de vitesse. Dans ce cas, pour accélérer ce processus et limiter la durée de patinage des disques 19 et 22 de l'embrayage, l'unité de pilotage 152 qui a détecté l'augmentation de V_{E} par rapport à V_{S}, commande l'alimentation de la chambre 46 de façon que le piston 44 pousse la cage 20 dans le sens desserrant l'embrayage 18, pour aboutir à la situation représentée à la figure 2. Par exemple, l'unité de pilotage 152 peut faire commencer l'action du piston 44 lorsque le rapport V_{E} /V_{S} devient supérieur à 1,1.

Pour que cette fonction de l'unité de pilotage 152 soit compatible avec ses autres fonctions tenant compte d'autres paramètres de fonctionnement du véhicule, il est avantageux que l'unité de pilotage 152 ait en mémoire deux tables de vérité disant si le piston 44 doit être activé en fonction des paramètres de fonctionnement fournis par les détecteurs 153, 154, 156 et 157. Lorsque l'unité de pilotage 152 détecte que le rapport V_{E}/V_{S} dépasse le seuil précité, égal par exemple à 1,1, l'unité de pilotage passe de la première à la deuxième table de vérité. Pour les conditions de fonctionnement en vigueur, la première table de vérité prévoyait la non-activation du piston 44 alors que la deuxième prévoit l'activation du piston 44 pour les mêmes conditions.

Dans une version un peu différente, il est possible que l'unité de pilotage 152, lorsqu'elle détecte que le processus de changement de rapport est achevé, supprime l'activation du piston 44. La détection de l'achèvement du processus de changement de rapport consiste par exemple à détecter que le rapport V_{E}/V_{S} atteint la valeur, par exemple égale à 1,4, correspondant au fonctionnement en réducteur de vitesse. La suppression de l'activation du piston 44 ne provoque pas le retour au fonctionnement en prise directe puisque le fonctionnement en réducteur a fait réapparaître les forces de denture Pac capables de stabiliser le fonctionnement en réducteur sans l'assistance du piston 44.

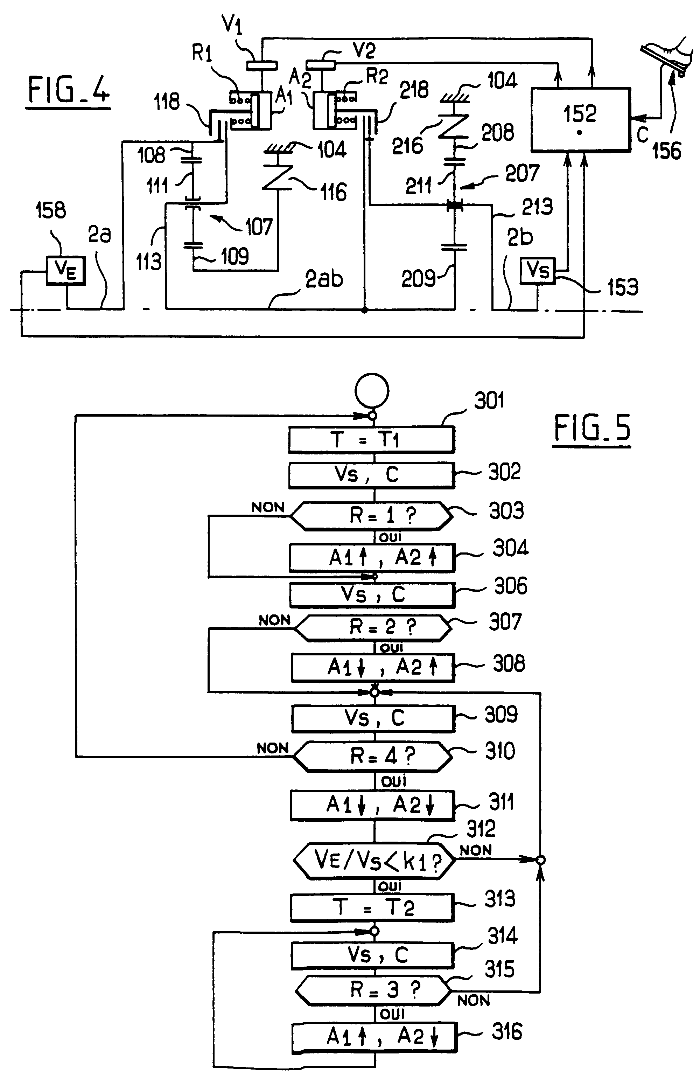

Dans l'exemple de réalisation représenté à la figure 4, le dispositif de transmission, représenté schématiquement, comprend deux trains planétaires 107, 207 montés en série. Le train planétaire 107 est semblable à celui décrit en référence aux figures 1 à 3 en ce sens que sa couronne 108 est reliée à l'arbre d'entrée 2a, sa roue planétaire 109 est reliée au carter 104 par l'intermédiaire d'une roue libre 116, et son porte-satellites 114, supportant des satellites 111 engrenant avec la couronne 108 et avec la roue planétaire 109, est relié à l'arbre de sortie 2ab du train 107 qui est également l'arbre d'entrée du train 207. Un embrayage 118 permet d'accoupler sélectivement la couronne 108 avec le porte-satellites 113, autrement dit l'arbre d'entrée 2a avec l'arbre intermédiaire 2ab pour réaliser une prise directe dans le train planétaire 107. Lorsque l'embrayage 118 est desserré, le train planétaire 107 fonctionne en réducteur, la roue planétaire 109 étant alors immobilisée par la roue libre 116. Le rapport de réduction fourni par un tel train planétaire, c'est-à-dire un train planétaire avec entrée reliée à la couronne et sortie reliée au porte-satellites, est couramment de l'ordre de 1,4.

Le second train planétaire 207 est différent en ce que son arbre d'entrée, constitué par l'arbre intermédiaire 2ab, est raccordé non pas à la couronne 208, mais à la roue planétaire 209. La couronne 208 est reliée au carter 104 par l'intermédiaire d'une roue libre 216 empêchant la couronne 208 de tourner en inverse. L'arbre de sortie 2b est relié au porte-satellites 213 supportant des satellites 211 engrenant chacun avec la couronne 208 et la roue planétaire 209. Un embrayage 218 permet de solidariser l'arbre intermédiaire 2ab avec l'arbre de sortie 2b pour réaliser une prise directe dans le second mécanisme différentiel 207.

Lorsque l'embrayage 218 est desserré, le mécanisme 207 fonctionne en réducteur avec la couronne 208 immobilisée par la roue libre 216. Compte tenu du fait que l'entrée est reliée à la roue planétaire 209 et que la sortie est reliée au porte-satellites 213, le rapport de réduction est alors typiquement égal à 3.

Les embrayages 118 et 218 sont sélectivement serrés par des ressorts R1 et respectivement R2, et desserrés à l'encontre de l'action de ces ressorts par des actionneurs A1 et respectivement A2, commandés chacun par une électrovanne V1, respectivement V2, elles-mêmes pilotées par l'unité de pilotage 152.

L'unité 152 reçoit sur ses entrées les signaux V_{E} et V_{S} fournis par les détecteurs 158 et 153 respectivement ainsi que le signal du détecteur 156 indicateur de la position de la pédale d'accélérateur du véhicule, ce qui correspond à un paramètre de charge C du moteur du véhicule, pouvant s'exprimer par exemple en pour-cent de la charge maximale.

Le dispositif de transmission qui vient d'être décrit est capable de fournir quatre rapports différents. Le premier rapport, ou rapport le plus court, est établi lorsque les deux embrayages 118, 218 sont desserrés et que par conséquent les deux trains planétaires 107, 207 fonctionnent en réducteurs. La transmission fournit alors un rapport de réduction égal à 1,4 X 3 = 4,2.

Pour le fonctionnement selon le deuxième rapport, l'embrayage 118 est serré et l'embrayage 218 est desserré, de sorte que le train planétaire 107 fonctionne en prise directe et le train planétaire 207 en réducteur, ce qui donne un rapport de réduction total de 3 dans le dispositif de transmission.

Pour le fonctionnement selon le troisième rapport, c'est l'inverse, l'embrayage 118 est desserré et l'embrayage 218 serré, de sorte que seul le premier train planétaire 107 fonctionne en réducteur. Ceci fournit un rapport de réduction global d'environ 1,4.

Pour le fonctionnement selon le quatrième rapport, ou rapport le plus long, les deux trains 107, 207 fonctionnent en prise directe, le rapport global étant égal à 1.

Dans l'exemple simple qui est illustré, les changements de rapport sont uniquement pilotés par l'unité 152 d'après les paramètres de fonctionnement V_{S} (vitesse de sortie) et C (charge) mais des versions plus sophistiquées sont concevables.

Dans ce dispositif de transmission, le passage du deuxième au troisième rapport est délicat à piloter car l'embrayage 118 doit se desserrer au moment où l'embrayage 218 doit se serrer. Si la synchronisation entre ces deux opérations est imparfaite, on risque d'avoir, pendant de courts instants, ou bien un desserrage simultané des deux embrayages correspondant à un retour au premier rapport de transmission avec vraisemblablement un risque de survitesse du moteur, ou bien un serrage simultané des deux embrayages, c'est-à-dire une brève situation de prise directe dans l'ensemble de la transmission avec un risque de sous-vitesse du moteur. Dans les deux cas, les passagers du véhicule subissent des chocs, et la mécanique subit des chocs et des contraintes inutiles. En outre, ces irrégularités de fonctionnement, si on les laissait se produire, réagiraient sur les paramètres de fonctionnement relevés par l'unité de pilotage 152, ce qui perturberait encore davantage le processus de changement de rapport.

Pour éviter ces inconvénients, l'unité de pilotage 152 provoque dans un premier temps le serrage de l'embrayage 218 sans desserrer l'embrayage 118. Ceci va réduire la vitesse d'entrée V_{E} par rapport à la vitesse de sortie V_{S} puisque cela correspond au passage progressif du dispositif de transmission du deuxième rapport directement au quatrième rapport. Au cours de ce processus partiel, la vitesse d'entrée V_{E} évolue donc dans le sens qui correspond au changement de rapport voulu, c'est-à-dire passage du deuxième au troisième rapport. Au contraire, si on avait commencé par actionner l'embrayage 118 dans le sens du desserrage, on aurait fait une manoeuvre correspondant au retour au premier rapport de transmission et donc à une augmentation de la vitesse d'entrée V_{E}.

Le serrage de l'embrayage 218 s'opère progressivement, notamment si la valve 69 comporte un trajet de fuite hydrauliquement résistant 151 comme représenté aux figures 1 à 3 pour empêcher la purge brutale de la chambre hydraulique 46. Revenant à la figure 4, lorsqu'au cours du serrage progressif de l'embrayage 218 l'unité de pilotage 152 détecte que le rapport V_{E}/V_{S} passe en-dessous d'un certain seuil K1, elle commande le desserrage du premier embrayage 118.

La figure 5 représente un exemple d'organigramme pouvant être mis en oeuvre par l'unité de pilotage 152.

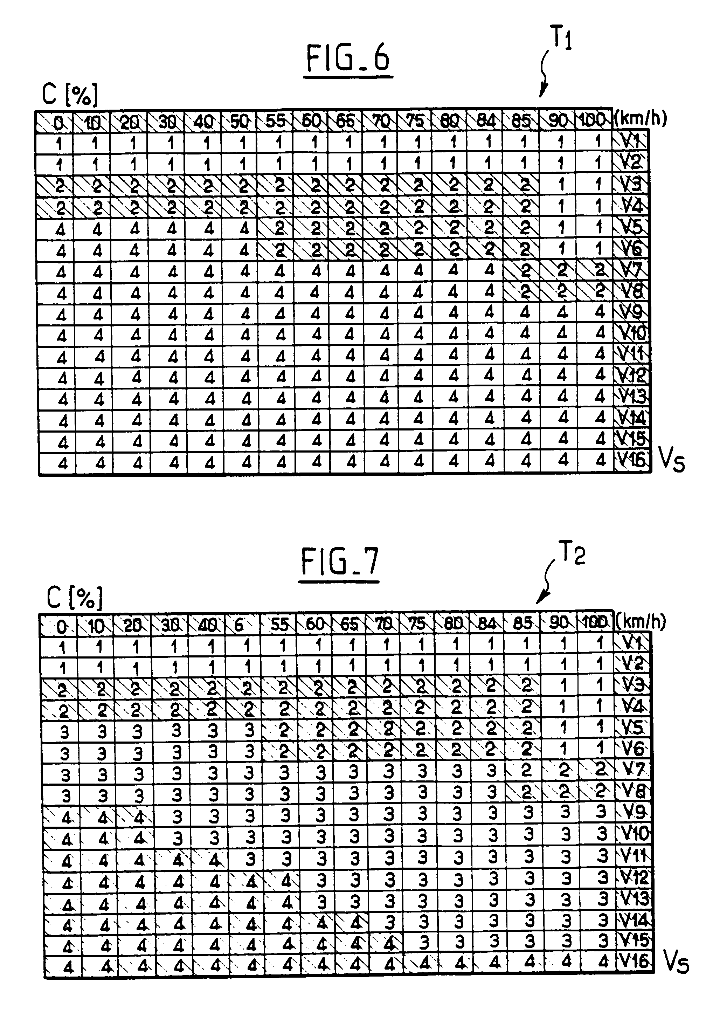

La première étape 301 consiste à sélectionner la table de vérité T₁ représentée à la figure 6 qui indique pour différentes valeurs de la charge C et de la vitesse V_{S} le rapport à sélectionner. La table de vérité T₁ ne prévoit dans aucune situation la sélection du troisième rapport, seuls les rapports 1, 2 et 4 peuvent être sélectionnés.

Ensuite, revenant à la figure 5, un test 303, précédé d'une étape 302 de lecture des paramètres V_{S} et C, détermine si d'après la table T₁ le rapport R₁ doit être sélectionné ou maintenu. Selon que la réponse est "oui" ou "non", un ordre 304 d'alimenter les actionneurs A1 et A2 est émis ou respectivement n'est pas émis. Ensuite, dans les deux cas, les paramètres V_{S} et C sont lus à nouveau (instruction 306) et un test 307 recherche si les conditions sont réunies pour établir le deuxième rapport. Si oui, une instruction 308 commande la purge de l'actionneur A1 et l'alimentation de l'actionneur A2, puis après nouvelle lecture des paramètres V_{S} et C (instruction 309), un test 310 recherche si les conditions sont réunies pour établir le quatrième rapport. Si la réponse au test 307 sur la nécessité d'établir le deuxième rapport est négative, on passe directement à l'instruction 309 et au test 310 sans passer par l'instruction 308. Si la réponse au test 310 est négative, on retourne au test 303 pour rechercher s'il y a lieu d'établir ou de maintenir le premier rapport.

Si la réponse au test 310 est positive, c'est que ou bien le troisième ou bien le quatrième rapport doit être établi, car la table de vérité T₁ ne permet pas de distinguer les deux cas. Mais quoi qu'il en soit, une instruction 311 commande la purge des deux actionneurs pour initier le passage au quatrième rapport. Ensuite, un test 312 recherche si le rapport V_{E}/V_{S} est inférieur au seuil K1. Dans la négative, on retourne à l'instruction 309 pour vérifier les paramètres V_{S} et C de vitesse du véhicule et de charge respectivement. Si ces paramètres n'ont pas trop varié, le test 310 ramène à l'instruction 311. Ce bouclage peut avoir lieu plusieurs fois jusqu'à ce que le serrage progressif de l'embrayage 218 ait suffisamment fait chuter la vitesse V_{E} pour que la réponse au test 312 ("V_{E}/V_{S} < K1 ?") soit positive. Dans ce cas, l'instruction 313 commande le passage à la table de vérité T₂ représentée à la figure 7, qui distingue les cas où le troisième rapport doit être sélectionné, de ceux où il y a lieu de sélectionner le quatrième rapport.

Après une instruction 314 de lecture de V_{S} et C, un test 315 recherche si le troisième rapport doit être sélectionné. Si oui, l'alimentation de l'actionneur A1 est initiée mais la purge de l'actionneur A2 est maintenue (instruction 316), puis on retourne en bouclage à l'instruction 314.

Si à un certain stade du fonctionnement selon le troisième rapport la réponse au test 315 devient négative, on retourne à l'instruction 309 et au test 310 pour rechercher si le quatrième rapport doit être sélectionné. Si oui, l'établissement et le maintien du quatrième rapport s'effectuent par un bouclage suivant les étapes successives 309 à 315. En effet, comme on part de la situation où le troisième rapport est déjà établi, la réponse au test 312 est immédiatement positive, dès la première exécution de la boucle précitée. Car, d'après ce qui a été dit précédemment, c'est pendant la transition du deuxième au troisième rapport que la réponse au test 312 passe de "NON" à "OUI".

Si à partir du fonctionnement selon le troisième rapport la réponse au test 315 puis la réponse au test 310 sont toutes deux négatives, c'est qu'il y a lieu d'établir le premier ou le deuxième rapport, et on retourne à l'instruction 301 qui réinstaure la table T1 puis le processus déjà exposé au début de la description de la figure 5 recommence.

Pour le passage du deuxième au troisième rapport, l'organigramme de la figure 5 a donc consisté à commencer un processus de passage au quatrième rapport, par l'instruction 311 de purge des deux actionneurs. Comme on part d'une situation de fonctionnement selon le deuxième rapport pour lequel l'actionneur A1 est déjà purgé, l'instruction 311 a pour seul effet de faire commencer la purge du deuxième actionneur A2, donc de faire changer d'état le deuxième train 207 dont le saut entre les deux rapports (1:1 en prise directe et 3:1 en réduction) est le plus élevé. Puis quand le rapport V_{E}/V_{S} devient inférieur à K1 (test 312) c'est à son tour le premier train 107 qui commence à changer d'état, par alimentation de l'actionneur A1 (instruction 316).

Dans l'exemple représenté, il n'a pas été jugé utile de gérer électroniquement la synchronisation du passage inverse, c'est-à-dire du troisième au deuxième rapport, car cette transition s'est avérée moins délicate en pratique.

Mais une telle gestion électronique aurait été possible. Pour cela, il aurait suffi que la table T2 ne fasse aucune distinction entre les cas où le premier et ceux où le deuxième rapport doit être instauré. Le processus de passage du troisième au deuxième rapport débuterait comme si l'on allait revenir directement au premier rapport, par simple ouverture de l'embrayage 218.

Ensuite, seulement lorsque le rapport V_{E}/V_{S} devient supérieur à un seul K2, s'opérerait le retour à la table T1 qui distingue entre les cas où le premier rapport doit être instauré de ceux où le deuxième rapport doit être instauré, et seulement à ce stade commencerait le serrage de l'embrayage 118 du premier train.

On voit par conséquent que selon l'invention il y a toujours intérêt, lorsqu'il faut intervertir les états de rapport long et de rapport court entre deux trains d'engrenage montés en série, à commencer l'actionnement par le train d'engrenage ayant le saut de rapport le plus grand entre son rapport long et son rapport court. Dans l'exemple, on commence toujours par actionner le deuxième train épicycloïdal 207, dont le rapport de démultiplication est trois fois plus grand en réducteur qu'en prise directe, et ce n'est qu'après qu'on actionne le premier train épicycloïdal 107, dont le rapport de réduction n'est que 1,4 fois plus grand que le rapport de prise directe.

Dans l'exemple représenté à la figure 4, on pourrait faire intervenir des forces de type centrifuge ou de denture comme représenté aux figures 1 à 3.

Dans les tables de vérité telles que T₁ et T₂, il pourrait y avoir des couples de valeur C, V_{S} pour lesquelles aucun choix de rapport n'est fixé, ce qui signifierait que pour ces conditions particulières, l'unité de pilotage 152 laisse les forces centrifuges et de dentures commander seules le dispositif de transmission. Même dans de telles conditions, il serait possible de prévoir que l'unité 152 commande l'entrée en action d'un actionneur pour favoriser le changement d'état d'un ou plusieurs embrayages pendant la transition entre deux rapports de transmission.

Si l'unité 152 de la figure 4 doit tenir compte de paramètres autres que C et V_{S} pour décider du choix d'un rapport, les tables T1 et T2 peuvent être remplacées chacune par des matrices à plus de deux dimensions.

## Revendications

1. Procédé pour commander le passage progressif d'un rapport de transmission ancien à un rapport de transmission nouveau dans un dispositif de transmission offrant au moins deux rapports de transmission différents, et comprenant un actionneur (44, 46, A1) actionnant un moyen d'accouplement sélectif (18, 118) du dispositif de transmission, procédé dans lequel après initiation du processus de changement de rapport on détecte au moins une grandeur physique et on commande l'actionneur (44, 46 ; A1) en fonction de la valeur détectée de la grandeur physique, caractérisé en ce que la grandeur physique détectée est une grandeur physique (V_{E}/V_{S}) de fonctionnement sur laquelle influe le processus de changement progressif du rapport de transmission.

2. Procédé selon la revendication 1, caractérisé en ce qu'on ne commande l'actionnement dudit moyen d'accouplement (7, 107) que lorsque la grandeur physique (V_{E}/V_{S}) a franchi un seuil prédéterminé (K1).

3. Procédé selon la revendication 1 ou 2, caractérisé en ce que comme grandeur physique on mesure une vitesse de rotation (V_{E}) en amont dudit dispositif d'accouplement et on la compare à une vitesse de rotation (V_{S}) en aval dudit dispositif d'accouplement.

4. Procédé selon l'une des revendications 1 à 3, caractérisé en ce que l'initiation du processus de changement est assurée par un moyen (18, A2) autre que ledit actionneur (44, 46 ; A1).

5. Procédé selon la revendication 4, caractérisé en ce que l'initiation du processus de changement est assurée par patinage d'un embrayage (18) lorsque le couple à transmettre par cet embrayage dépasse une valeur définie par un moyen de serrage (29, 34).

6. Procédé selon la revendication 5, caractérisé en ce que l'actionneur (44, 46 ; A1) est monté pour contribuer à l'ouverture de l'embrayage (18), constituant ledit moyen d'accouplement sélectif, à l'encontre du moyen de serrage (29, 34).

7. Procédé selon la revendication 5 ou 6, caractérisé en ce que l'ouverture de l'embrayage est assurée par l'action conjointe de l'actionneur (44, 46 ; A1) et d'une force de réaction de denture (Pac) produite par une denture (8, 108) qui se trouve chargée de manière croissante à mesure que le couple transmis par l'embrayage (18, 118) décroît.

8. Procédé selon la revendication 4, caractérisé en ce que ledit moyen autre est un deuxième moyen d'accouplement sélectif (218).

9. Procédé selon la revendication 8, caractérisé en ce que parmi les deux moyens d'accouplement à actionner, on choisit comme deuxième moyen d'accouplement sélectif (218) celui dont l'actionnement fait varier la vitesse d'entrée (V_{E}) de la transmission dans le même sens que la variation de vitesse d'entrée qui résultera du changement de rapport qui est en train d'être opéré.

10. Procédé selon la revendication 8 ou 9, caractérisé en ce qu'on pilote les deux moyens d'accouplement (118, 218) sur la base de tables de vérité (T1, T2) définissant au moins indirectement l'état des moyens d'accouplement en fonction de paramètres (V_{S}, C) de fonctionnement du véhicule, et en ce qu'on change la table de vérité au moins une fois pendant ledit changement de rapport à un certain stade défini d'après la valeur de ladite grandeur physique (V_{E}/V_{S}).

11. Procédé selon la revendication 10, caractérisé en ce que lorsqu'on change la table de vérité, on passe d'une table (T1) qui pour changer le rapport dans le sens précité à partir du rapport de transmission ancien, ne prévoit que l'actionnement du deuxième moyen d'accouplement (28), à une table (T2) faisant intervenir l'actionnement du premier moyen d'accouplement (118).

12. Procédé selon la revendication 10 ou 11, caractérisé en ce qu'il est appliqué à une transmission dans laquelle à partir de l'état correspondant au rapport de transmission ancien, l'actionnement du deuxième moyen d'accouplement (218) sans actionnement du premier moyen d'accouplement (118) correspond à un autre rapport de transmission, et en ce que pour changer la table de vérité on passe d'une première table de vérité (T1) prévoyant le passage direct du rapport ancien audit autre rapport, à une seconde table de vérité (T2) prévoyant le passage dudit autre rapport au rapport nouveau.

13. Procédé selon l'une des revendications 8 à 12, caractérisé en ce qu'il est appliqué à un dispositif de transmission comprenant deux mécanismes différentiels (107, 207) montés en série et offrant chacun deux rapports de transmission haut et respectivement bas, pour commander le passage d'un rapport ancien à un rapport nouveau, changement au cours duquel un des mécanismes différentiels (118) passe du rapport haut au rapport bas et l'autre (213) passe du rapport bas au rapport haut par actionnement des deux moyens d'accouplement (118, 218) associés chacun à l'un des mécanismes, et en ce qu'on choisit comme deuxième moyen d'accouplement celui qui est associé au mécanisme différentiel dont le saut entre le rapport haut et le rapport bas est le plus grand.

14. Dispositif de transmission pour véhicule, comprenant au moins un train d'engrenages (7 ; 107, 207) et pouvant passer d'un rapport de transmission ancien à un rapport de transmission nouveau par actionnement d'un moyen d'accouplement sélectif (18, 118), le dispositif comprenant :
- des moyens initiateurs d'un changement de rapport de transmission en fonction d'au moins un paramètre de fonctionnement du véhicule:
- des moyens de détection (153, 158) pour détecter une grandeur physique de fonctionnement; et
- des moyens de pilotage (152) pour commander l'actionnement du moyen d'accouplement (18, 118) d'après l'évolution de la valeur de ladite grandeur physique;
caractérisé en ce que les moyens de détection (153, 158) sont conçus pour détecter une grandeur physique (VE/VS) susceptible d'être influencée par le changement progressif du rapport de transmission après son initiation.

15. Dispositif selon la revendication 14, caractérisé en ce que les moyens de pilotage (152) sont conçus pour commander le début de l'actionnement dudit moyen d'accouplement lorsque la valeur de la grandeur physique (V_{E}/V_{S}) franchit un seuil prédéterminé (K1), les moyens initiateurs (18, 218) étant autres que l'actionneur (44, 46, A1) dudit moyen d'accouplement.

16. Dispositif selon la revendication 14 ou 15, caractérisé en ce que les moyens pour détecter une grandeur physique comprennent des moyens (158) pour détecter une vitesse de rotation (V_{E}) en amont dudit moyen d'accouplement (18, 118), relativement au sens du transfert de l'énergie de l'entrée (2a) vers la sortie (2b) du dispositif de transmission.

17. Dispositif selon l'une des revendications 14 à 16, caractérisé en ce que les moyens initiateurs comprennent des moyens (29, 34) pour appliquer au moyen d'accouplement une force de serrage limitée de façon que le moyen d'accouplement (18) se mette à patiner lorsque le couple à transmettre par ledit moyen d'accouplement dépasse une valeur déterminée par ladite force de serrage.

18. Dispositif selon la revendication 17, caractérisé en ce qu'il comprend des moyens tachymétriques (29) définissant ladite force de serrage en lui donnant une valeur qui augmente avec une vitesse de rotation du dispositif de transmission.

19. Dispositif selon la revendication 17 ou 18, caractérisé en ce qu'il comprend des moyens (17, B2) pour transmettre audit moyen d'accouplement (18), dans le sens du desserrage, une force (Pac) de réaction de denture subie par une denture (8) du train d'engrenages qui est chargée de manière croissante lorsque ledit moyen d'accouplement (18) patine.

20. Dispositif selon l'une des revendications 14 à 18, caractérisé en ce que les moyens de pilotage (152) comprennent en mémoire au moins deux tables de vérité (T1, T2) définissant l'état que ledit moyen d'accouplement (18, 118) doit prendre en fonction d'au moins un paramètre (V_{S}, C) de fonctionnement du véhicule, et des moyens pour passer d'une première (T1) à une deuxième (T2) desdites tables de vérité lorsque ladite grandeur physique (V_{E}/V_{S}) franchit un seuil (K1), la première et la deuxième table de vérité prévoyant le maintien en l'état et respectivement le changement d'état dudit actionneur (18, 118) pour la valeur courante du paramètre de fonctionnement.

21. Dispositif de transmission selon l'une des revendications 14 à 16, caractérisé en ce que les moyens initiateurs comprennent un deuxième moyen d'accouplement sélectif (218).

22. Dispositif de transmission selon la revendication 21, caractérisé en ce que les moyens de pilotage (152) comprennent en mémoire au moins deux tables de vérité (T1, T2) définissant l'état que doivent prendre les deux moyens d'accouplement sélectif (118, 218) en fonction dudit "au moins un" paramètre (V_{S}, C) de fonctionnement du véhicule, et en ce que les moyens de pilotage (152) comprennent des moyens (312, 313) pour, en fonction de l'évolution de la grandeur physique (V_{E}/V_{S}), passer d'une première (T1) des tables, qui prévoit un état intermédiaire d'actionnement du second moyen d'accouplement (218) avec maintien en l'état du premier moyen d'accouplement (118), à la seconde (T2) des tables, qui prévoit l'actionnement simultané des deux moyens d'accouplement (118, 218), par rapport à l'état des moyens d'accouplement définissant le rapport de transmission ancien.

23. Dispositif selon la revendication 22, caractérisé en ce que selon la deuxième table, l'état intermédiaire est prévu pour définir un autre rapport de transmission (R4), lorsque ledit "au moins un" paramètre de fonctionnement (V_{E}/V_{S}) prend des valeurs situées au-delà de celles correspondant au passage du rapport de transmission ancien (R2) au rapport de transmission nouveau (R3).

24. Dispositif selon l'une des revendications 21 à 23, caractérisé en ce qu'il comprend deux trains d'engrenage (107, 207) montés en série et à chacun desquels est associé l'un des moyens d'accouplement (118, 218), et capables de fournir chacun un rapport de transmission haut et un rapport de transmission bas, le saut entre le rapport haut et le rapport bas étant différent d'un train d'engrenage à l'autre, en ce que le rapport de transmission ancien (R2) et le rapport de transmission nouveau (R3) sont obtenus en faisant fonctionner l'un respectif des trains d'engrenage selon son rapport haut et l'autre selon son rapport bas.

25. Dispositif selon la revendication 24, caractérisé en ce que les moyens de pilotage sont en outre capables, à partir du rapport de transmission ancien (R2), de faire passer le dispositif de transmission à un rapport extrême (R4) par actionnement du deuxième moyen d'accouplement (218) avec maintien en l'état du premier moyen d'accouplement (18).

26. Dispositif selon l'une des revendications 14 à 25, caractérisé par des moyens d'amortissement (151) montés pour ralentir l'actionnement de l'un au moins des moyens d'accouplement sélectif (18).

## Patentansprüche

1. Verfahren zur Steuerung des schrittweisen Übergangs von einem alten Übersetzungsverhältnis zu einem neuen Übersetzungsverhältnis in einem Schaltgetriebe, das zumindest zwei verschiedene Übersetzungsverhältnisse bietet und eine Betätigungsvorrichtung (44, 46; A1) umfaßt, die ein Mittel (18, 118) zur selektiven Kupplung des Schaltgetriebes betätigt, wobei bei diesem Verfahren nach Initiierung des Gangschaltvorgangs zumindest eine physikalische Größe ermittelt wird und die Betätigungsvorrichtung (44, 46; A1) in Abhängigkeit von dem ermittelten Wert der physikalischen Größe gesteuert wird, dadurch gekennzeichnet, daß die ermittelte physikalische Größe eine physikalische Betriebsgröße (V_{E}/V_{S}) ist, auf die der Prozeß des schrittweisen Wechsels des Übersetzungsverhältnisses einwirkt.

2. Verfahren nach Anspruch 1, dadurch gekennzeichnet, daß die Betätigung des genannten Kupplungsmittels (7, 107) nur dann gesteuert wird, wenn die genannte physikalische Größe (V_{E}/V_{S}) eine vorbestimmte Schwelle (K1) überschritten hat.

3. Verfahren nach Anspruch 1 oder 2, dadurch gekennzeichnet, daß als physikalische Größe eine Drehgeschwindigkeit (V_{E}) stromaufwärts von der genannten Kupplungsvorrichtung gemessen wird und diese mit einer Drehgeschwindigkeit (V_{S}) stromabwärts von der genannten Kupplungsvorrichtung verglichen wird.

4. Verfahren nach einem der Ansprüche 1 bis 3, dadurch gekennzeichnet, daß die Initiierung des Gangschaltvorgangs durch ein Mittel (18, A2) gewährleistet wird, das ein anderes ist als die genannte Betätigungsvorrichtung (44, 46; A1).

5. Verfahren nach Anspruch 4, dadurch gekennzeichnet, daß die Initiierung des Gangschaltvorgangs durch das Rutschen einer Kupplung (18) gewährleistet wird, wenn das durch diese Kupplung zu übertragende Drehmoment einen Wert übersteigt, der durch ein Mittel (29, 34) zum Zusammendrücken definiert wurde.

6. Verfahren nach Anspruch 5, dadurch gekennzeichnet, daß die Betätigungsvorrichtung (44, 46; A1) so montiert ist, daß sie zur Öffnung der Kupplung (18), die das genannte Mittel zur selektiven Kupplung darstellt, gegen das Mittel (29, 34) zum Zusammendrücken beiträgt.

7. Verfahren nach Anspruch 5 oder 6, dadurch gekennzeichnet, daß die Öffnung der Kupplung durch die gemeinsame Wirkung der Betätigungsvorrichtung (44, 46; A1) und einer Verzahnungsreaktionskraft (Pac) gewährleistet wird, die von einer Verzahnung (8, 108) erzeugt wird, die immer stärker belastet wird, je mehr das durch die Kupplung (18, 118) übertragene Drehmoment abnimmt.

8. Verfahren nach Anspruch 4, dadurch gekennzeichnet, daß das genannte andere Mittel ein zweites Mittel (218) zur selektiven Kupplung ist.

9. Verfahren nach Anspruch 8, dadurch gekennzeichnet, daß unter den beiden zu betätigenden Kupplungsmitteln als zweites Mittel (218) zur selektiven Kupplung dasjenige gewählt wird, dessen Betätigung die Eingangsgeschwindigkeit (V_{E}) des Schaltgetriebes in der gleichen Richtung ändert wie die Änderung der Eingangsgeschwindigkeit, die aus der gerade durchgeführten Gangschaltung resultieren wird

10. Verfahren nach Anspruch 8 oder 9, dadurch gekennzeichnet, daß die beiden Kupplungsmittel (118, 218) auf der Basis von Wertetabellen (T1, T2) gesteuert werden, die zumindest indirekt den Zustand der Kupplungsmittel in Abhängigkeit von Betriebsparametern (V_{S}, C) des Fahrzeugs definieren, und daß die Wertetabelle zumindest einmal während des genannten Gangwechsels gewechselt wird, und zwar in einem gewissen Stadium, das nach dem Wert der genannten physikalischen Größe (V_{E}/V_{S}) definiert ist.

11. Verfahren nach Anspruch 10, dadurch gekennzeichnet, daß man beim Wechsel der Wertetabelle von einer Tabelle (T1), die zur Änderung des Verhältnisses in die obengenannte Richtung ausgehend vom alten Übersetzungsverhältnis nur die Betätigung des zweiten Kupplungsmittels (28) vorsieht, zu einer Tabelle (T2) übergeht, die die Betätigung des ersten Kupplungsmittels (118) ins Spiel kommen läßt.

12. Verfahren nach Anspruch 10 oder 11, dadurch gekennzeichnet, daß es auf ein Getriebe angewendet wird, in dem ausgehend von dem Zustand, der dem alten Übersetzungsverhältnis entspricht, die Betätigung des zweiten Kupplungsmittels (218) ohne Betätigung des ersten Kupplungsmittels (118) einem anderen Übersetzungsverhältnis entspricht, und daß man beim Wechsel der Wertetabelle von einer ersten Wertetabelle (T1), die den direkten Übergang vom alten Verhältnis zu dem genannten anderen Verhältnis vorsieht, zu einer zweiten Wertetabelle (T2) übergeht, die den Übergang von dem genannten anderen Verhältnis zu dem neuen Verhältnis vorsieht.

13. Verfahren nach einem der Ansprüche 8 bis 12, dadurch gekennzeichnet, daß es auf ein Getriebe angewendet wird, das zwei Differentialmechanismen (107, 207) umfaßt, die in Serie montiert sind und jeweils zwei hohe bzw. niedrige Übersetzungsverhältnisse bieten, um den Übergang von einem alten Verhältnis zu einem neuen Verhältnis zu steuern, wobei im Lauf dieses Wechsels einer der Differentialmechanismen (118) vom hohen zum niedrigen Verhältnis übergeht und der andere (213) vom niedrigen zum hohen Verhältnis übergeht, und zwar durch Betätigung der beiden Kupplungsmittel (118, 218), die jeweils mit einem der Mechanismen verbunden sind, und daß als zweites Kupplungsmittel dasjenige gewählt wird, das mit dem Differentialmechanismus verbunden ist, bei dem der Sprung zwischen dem hohen Verhältnis und dem niedrigen Verhältnis am größten ist.

14. Schaltgetriebe für ein Fahrzeug, das zumindest ein Getriebezug (7; 107, 207) umfaßt und durch die Betätigung eines Mittels (18, 118) zur selektiven Kupplung von einem alten Übersetzungsverhältnis zu einem neuen Übersetzungsverhältnis übergehen kann, wobei das Schaltgetriebe folgendes umfaßt:
- Mittel zur Initiierung eines Wechsels des Übersetzungsverhältnisses in Abhängigkeit von zumindest einem Betriebsparameter des Fahrzeugs;
- Ermittlungsmittel (153, 158) zur Ermittlung einer physikalischen Betriebsgröße; und
- Steuermittel (152) zur Steuerung der Betätigung des Kupplungsmittels (18, 118) entsprechend des Verlaufs des Werts der genannten physikalischen Größe;
dadurch gekennzeichnet, daß die Ermittlungsmittel (153, 158) so konzipiert sind, daß sie eine physikalische Größe (V_{E}/V_{S}) ermitteln, die von der schrittweisen Änderung des Übersetzungsverhältnisses nach ihrer Initiierung beeinflußt werden kann.

15. Schaltgetriebe nach Anspruch 14, dadurch gekennzeichnet, daß die Steuermittel (152) so konzipiert sind, daß sie den Beginn der Betätigung des genannten Kupplungsmittels steuern, wenn der Wert der physikalischen Größe (V_{E}/V_{S}) eine vorbestimmte Schwelle (K1) überschreitet, wobei die Initiierungsmittel (18, 218) andere sind als die Betätigungsvorrichtung (44, 46; A1) des genannten Kupplungsmittels.

16. Schaltgetriebe nach Anspruch 14 oder 15, dadurch gekennzeichnet, daß die Mittel zur Ermittlung einer physikalischen Größe Mittel (158) umfassen, um eine Drehgeschwindigkeit (V_{E}) stromaufwärts von dem genannten Kupplungsmittel (18, 118) in bezug auf die Richtung der Übertragung der Energie vom Eingang (2a) zum Ausgang (2b) des Getriebes zu ermitteln.

17. Schaltgetriebe nach einem der Ansprüche 14 bis 16, dadurch gekennzeichnet, daß die Initiierungsmittel Mittel (29, 34) umfassen, um auf das Kupplungsmittel eine Zusammenpreßkraft auszuüben, die so begrenzt ist, daß das Kupplungsmittel (18) zu rutschen beginnt, wenn das durch das genannte Kupplungsmittel zu übertragende Drehmoment einen Wert überschreitet, der durch die genannte Zusammenpreßkraft bestimmt ist.

18. Schaltgetriebe nach Anspruch 17, dadurch gekennzeichnet, daß es Drehzahlmeßmittel (29) umfaßt, die die genannte Zusammenpreßkraft definieren, indem sie ihr einen Wert geben, der mit einer Drehgeschwindigkeit des Getriebes steigt.

19. Schaltgetriebe nach Anspruch 17 oder 18, dadurch gekennzeichnet, daß es Mittel (17, B2) umfaßt, um zu dem genannten Kupplungsmittel (18) in der Richtung der Lockerung eine Verzahnungsreaktionskraft (Pac) zu übertragen, die auf eine Verzahnung (8) des Getriebezugs einwirkt, der auf ansteigende Weise belastet wird, wenn das genannte Kupplungsmittel (18) rutscht.

20. Schaltgetriebe nach einem der Ansprüche 14 bis 18, dadurch gekennzeichnet, daß die Steuermittel (152) folgendes umfassen: im Speicher zumindest zwei Wertetabellen (T1, T2), die den Zustand definieren, den das genannte Kupplungsmittel (18, 118) in Abhängigkeit von zumindest einem Betriebsparameter (V_{S}, C) des Fahrzeugs annehmen muß, und Mittel zum Übergang von der ersten (T1) zur zweiten (T2) Wertetabelle, wenn die genannte physikalische Größe (V_{E}/V_{S}) eine Schwelle (K1) überschreitet, wobei die erste und die zweite Wertetabelle die Aufrechterhaltung des Zustands bzw. die Veränderung des Zustands der genannten Betätigungsvorrichtung (18, 118) für den laufenden Wert des Betriebsparameters vorsehen.

21. Schaltgetriebe nach einem der Ansprüche 14 bis 16, dadurch gekennzeichnet, daß die Initiierungsmittel ein zweites Mittel zur selektiven Kupplung (218) umfassen.

22. Schaltgetriebe nach Anspruch 21, dadurch gekennzeichnet, daß die Steuermittel (152) im Speicher zumindest zwei Wertetabellen (T1, T2) umfassen, die den Zustand definieren, den die beiden Mittel (118, 218) zur selektiven Kupplung in Abhängigkeit des "zumindest einen" Betriebsparameters (V_{S}, C) des Fahrzeugs annehmen müssen, und daß die Steuermittel (152) Mittel (312, 313) umfassen, um in Abhängigkeit vom Verlauf der physikalischen Größe (V_{E}/V_{S}) von einer ersten (T1) der Tabellen, die einen Zwischenzustand bestehend aus der Betätigung des zweiten Kupplungsmittels (218) mit Beibehaltung des Zustands des ersten Kupplungsmittels (118) vorsieht, zu der zweiten (T2) der Tabellen, die die gleichzeitige Betätigung der beiden Kupplungsmittel (118, 218) vorsieht, überzugehen, und zwar in bezug auf den Zustand der Kupplungsmittel, der das alte Übersetzungsverhältnis definiert.

23. Schaltgetriebe nach Anspruch 22, dadurch gekennzeichnet, daß gemäß der zweiten Tabelle der Zwischenzustand vorgesehen ist, um ein anderes Übersetzungsverhältnis (R4) zu definieren, wenn der genannte "zumindest eine" Betriebsparameter (V_{E}/V_{S}) Werte annimmt, die jenseits von denen liegen, die dem Übergang vom alten Übersetzungsverhältnis (R2) zum neuen Übersetzungsverhältnis (R3) entsprechen.

24. Schaltgetriebe nach einem der Ansprüche 21 bis 23, dadurch gekennzeichnet, daß es zwei Getriebezüge (107, 207) umfaßt, die in Serie montiert sind, mit denen jeweils eines der Kupplungsmittel (118, 218) verbunden ist, und die in der Lage sind, jeweils ein hohes und ein niedriges Übersetzungsverhältnis zu liefern, wobei der Sprung zwischen dem hohen und dem niedrigen Verhältnis von einem Getriebezug zum anderen unterschiedlich ist, und daß das alte Übersetzungsverhältnis (R2) und das neue Übersetzungsverhältnis (R3) erzielt werden, indem einer der Getriebezüge gemäß seinem hohen Verhältnis und der andere gemäß seinem niedrigen Verhältnis in Betrieb gesetzt werden

25. Schaltgetriebe nach einem der Anspräche 24, dadurch gekennzeichnet, daß die Steuermittel darüber hinaus in der Lage sind, ausgehend vom alten Übersetzungsverhältnis (R2) das Schaltgetriebe durch Betätigung des zweiten Kupplungsmittels (218) in ein extremes Übersetzungsverhältnis (R4) übergehen zu lassen, wobei das erste Kupplungsmittel (18) in seinem Zustand belassen wird.

26. Schaltgetriebe nach einem der Ansprüche 14 bis 25, gekennzeichnet durch Dämpfungsmittel (151), die vorgesehen sind, um die Betätigung von zumindest einem der Mittel zur selektiven Kupplung (18) zu verlangsamen.

## Claims

1. Method of controlling the progressive change from an old transmission ratio to a new transmission ratio in a transmission device offering at least two different transmission ratios, and comprising an actuator (44, 46; A1) which actuates a selective coupling means (18, 118) of the transmission device, wherein after initiation of the ratio change process, there is detected at least one operation-related physical magnitude and the actuator (44, 46; A1) is controlled according to the detected value of the physical magnitude, characterized in that the physical magnitude which is detected is a physical magnitude (V_{E}/V_{S}) which is influenced by the progressive transmission ratio change process.

2. Method according to Claim 1, characterized in that the actuation of the said coupling means (7, 107) is controlled only when the physical magnitude (V_{E}/V_{S}) has passed a predetermined threshold (K1).

3. Method according to Claim 1 or 2, characterized in that, as a physical magnitude, there is measured a speed of rotation (V_{E}) upstream of the said coupling device and it is compared with a speed of rotation (V_{S}) downstream of the said coupling device.

4. Method according to one of Claims 1 to 3, characterized in that the initiation of the change process is provided by a means (18, A2) other than the said actuator (44, 46; A1).

5. Method according to Claim 4, characterized in that the initiation of the change process is provided by the slipping of a clutch (18) when the torque to be transmitted by this clutch exceeds a value defined by an engagement means (29, 34).

6. Method according to Claim 5, characterized in that the actuator (44, 46: A1) is mounted such that it contributes to the release of the clutch (18), constituting the said selective coupling means, against the action of the engagement means (29, 34).

7. Method according to Claim 5 or 6, characterized in that the release of the clutch is ensured by the combined action of the actuator (44, 46; A1) and a gearing reaction force (Pac) produced by teeth (8, 108) which are loaded to an increasing degree as the torque transmitted by the clutch (18, 118) decreases.

8. Method according to Claim 4, characterized in that the said other means is a second selective coupling means (218).

9. Method according to Claim 8, characterized in that, from the two coupling means to be actuated, the one chosen as the second selective coupling means (218) is the one whose actuation causes the input speed (V_{E}) of the transmission to vary in the same sense as the variation of input speed which will result in the change of ratio which is in the process of being carried out.

10. Method according to Claim 8 or 9, characterized in that the two coupling means (118, 218) are controlled on the basis of truth tables (T1, T2) defining at least indirectly the state of the coupling means according to operation parameters (V_{S}, C) of the vehicle, and in that the truth table is changed at least once during the said ratio change at a certain stage defined according to the value of the said physical magnitude (V_{E}/V_{S}).

11. Method according to Claim 10, characterized in that when the truth table is changed, the change is made from a table (T1) which, in order to change the ratio in the said sense from the old transmission ratio, provides for the actuation only of the second coupling means (28), to a table (T2) which causes the actuation of the first coupling means (118) to occur.

12. Method according to Claim 10 or 11, characterized in that it is applied to a transmission in which, starting from the state corresponding to the old transmission ratio, the actuation of the second coupling means (218) without actuating the first coupling means (118) corresponds to another transmission ratio, and in that in order to change the truth table the change is made from a first truth table (T1) providing for the direct change from the old ratio to the said other ratio, to a second truth table (T2) providing for the change from the said other ratio to said new ratio.

13. Method according to one of Claims 8 to 12, characterized in that it is applied to a transmission device comprising two differential mechanisms (107, 207) mounted in series and each offering two transmission ratios, high and low respectively, in order to control the change from an old ratio to a new ratio, a change during which one of the differential mechanisms (118) changes from the high ratio to the low ratio and the other one (213) changes from the low ratio to the high ratio by actuating two coupling means (118, 218) each one associated with one of the mechanisms, and in that the coupling means chosen as the second coupling means is the one which is associated with the differential mechanism whose jump between the high ratio and the low ratio is biggest.

14. Transmission device for a vehicle comprising at least one gear train (7; 107, 207) and able to change from an old transmission ratio to a new transmission ratio by actuating a selective coupling means (18, 118), the device comprising :
- initiating means for initiating a change of transmission ratio as a function of at least one operating parameter of the vehicle,
- detection means (153, 158) for detecting an operation-related physical magnitude,
- control means (152) for controlling the actuation of the coupling means (18, 118) according to the evolution of the value of said physical magnitude,
characterized in that the detection means (153, 158) are designed for detecting a physical magnitude (VE/VS) which is capable of being influenced by the progressive change of transmission ratio after its initiation.

15. Device according to Claim 14, characterized in that the control means (152) are designed to command the start of actuation of the said coupling means when the value of the physical magnitude (V_{E}/V_{S}) passes a predetermined threshold (K1), the initiating means (18, 218) being other than the actuator (44, 46; A1) of the said coupling means.

16. Device according to Claim 14 or 15, characterized in that the means of detecting a physical magnitude comprise means (158) of detecting a speed of rotation (V_{E}) upstream of the said coupling means (18, 118), with respect to the direction of energy transfer from the input (2a) to the output (2b) of the transmission device.

17. Device according to one of Claims 14 to 16, characterized in that the initiating means comprise means (29, 34) of applying to the coupling means an engagement force limited in such a way that the coupling means (18) begins to slip when the torque to be transmitted by the said coupling means exceeds a value determined by the said engagement force.

18. Device according to Claim, 17, characterized in that it comprises tachometric means (29) defining the said engagement force by giving it a value which increases with a speed of rotation of the transmission device.

19. Device according to Claim 17 or 18, characterized in that it comprises means (17, B2) of transmitting to the said coupling means (18), in the sense of disengagement, a gearing reaction force (Pac) undergone by teeth (8) of a gear train which is loaded increasingly when the said coupling means (18) slips.

20. Device according to one of Claims 14 to 18, characterized in that the control means (152) contain in memory at least two truth tables (T1, T2) defining the state which the said coupling means (18, 118) must assume as a function of at least one operating parameter (V_{S}, C) of the vehicle, and means of changing from a first (T1) to a second (T2) of the said truth tables when the said physical magnitude (V_{E}/V_{S}) passes a threshold (K1), the first and second truth tables providing for maintaining the state and changing the sate respectively of the said actuator (18, 118) for the current value of the operating parameter.

21. Transmission device according to one of Claims 14 to 16, characterized in that the initiating means comprise a second selective coupling means (218).

22. Transmission device according to Claim 21, characterized in that the control means (152) contain in memory at least two truth tables (T1, T2) defining the state which the two selective coupling means (118, 218) must assume as a function of said "at least one" operating parameter (V_{S}, C) of the vehicle, and in that the control means (152) comprise means (312, 313) of, as a function of the evolution of the physical magnitude (V_{E}/V_{S}), changing from a first (T1) of the tables, which provides for an intermediate state of actuating the second coupling means (218) with the maintaining of the state of the first coupling means (118), to the second (T2) of the tables, which provides for the simultaneous actuating of the two coupling means (118, 218), with respect to the state of the coupling means defining the old transmission ratio.

23. Device according to Claim 22, characterized in that, according to the second table, the intermediate state is provided for defining another transmission ratio (R4), when the said "at least one" operating parameter (V_{E}/V_{S}) assumes values beyond the range of those corresponding to the changing from the old transmission ratio (R2) to the new transmission ratio (R3).

24. Device according to one of Claims 21 to 23, characterized in that it comprises two gear trains (107, 207) mounted in series and with each of which there is associated one of the coupling means (118, 218), and each of which is capable of providing a high transmission ratio and a low transmission ratio, the jump between the high ratio and the low ratio being different in both gear trains, and in that the old transmission ratio (R2) and the new transmission ratio (R3) are obtained by causing a respective one of the gear trains to operate according to its high ratio and the other according to its low ratio.

25. Device according to Claim 24, characterized in that the control means are furthermore capable, starting from the old transmission ratio (R2) of causing the transmission device to change to an extreme ratio (R4) by actuating the second coupling means (218) whilst maintaining the state of the first coupling means (18).

26. Device according to one of Claims 14 to 25, characterized by damping means (151) included to slow down the actuation of at least one of the selective coupling means (18).
